# DEMANDE DE BREVET EUROPEEN

(11) **EP 1 982 617 A1**
(43) Date de publication de la demande: **22.10.2008**
(21) Numéro de dépôt: 07106458.8
(22) Date de dépôt: 18.04.2007
(51) Int. Cl.: A47B 55/00, F16B 12/06

(54) **Meuble métallique de rangement.**

(71) Demandeur: Mewaf International N.V., 8510 Kortrijk-Marke (BE)
(72) Inventeur: Van Marcke, Carl, 9770 Kruishoutem (BE)
(74) Mandataire: Quintelier, Claude

(57) **Abrégé**

Meuble métallique de bureau, en particulier une armoire de bureau, comprenant au moins une première (2) et une deuxième (3) paroi latérale ainsi qu'une paroi de dos (8) et une paroi de dessus, lesdites parois étant pourvues de profils d'emboîtement, dits de positionnement, pour I'assemblage entre-elles par emboîtement, lesquels profils d'emboîtement présentent au moins un élément d'emboîtement femelle (10) et au moins un élément d'emboîtement male (11), agencé pour être glissé dans l'élément d'emboîtement femelle. Une colle adhesive durcissante (13) est présente dans au moins un desdits éléments d'emboîtement femelles, laquelle colle adhesive durcissante s'étend entre au moins une surface interne de I'élément d'emboîtement femelle et au moins une surface de l'élément d'emboîtement male, lorsque ce dernier est emboîté dans l'élément d'emboîtement femelle.

## Description

La présente invention concerne un meuble métallique de bureau, en particulier une armoire de bureau, comprenant au moins une première et une deuxième paroi latérale ainsi qu'une paroi de dos et une paroi de dessus, lesdites parois étant pourvues de profils d'emboîtement dits de positionnement pour l'assemblage entre-elles par emboîtement, lesquels profils d'emboîtement présentent au moins un élément d'emboîtement femelle et au moins un élément d'emboîtement mâle, agencé pour être glissé dans l'élément d'emboîtement femelle.

Un tel meuble métallique de bureau est décrit dans le brevet français n° 828385. Le meuble connu est en particulier une armoire de bureau ou un classeur et sert au rangement de dossiers, d'appareils ou autres. Les parois de dos et latérales sont assemblées par emboîtement entre-elles grâce à l'usage des profils d'emboîtement. L'avantage d'utiliser des profils d'emboîtement est que les parois métalliques peuvent être peintes avant que le meuble ne soit assemblé et que le meuble peut être stocké et transporté en pièces détachées. Ceci facilite non seulement la fabrication et la peinture des parois, mais réduit l'espace nécessaire pour le stockage et le transport au minimum.

Un désavantage d'un tel meuble métallique est qu'il a tendance à ballotter lorsqu'on le secoue. Malgré que ceci n'affecte pas la stabilité du meuble certains utilisateurs préfèrent un meuble dit «monobloc» où les parois sont rigidement fixées entre-elles, par exemple par soudure, rivetage ou clinchage. Ces meubles «monobloc» n'ont en effet pas cette tendance à ballotter. Toutefois, ces meubles métalliques «monobloc» ont comme désavantage, lorsque les parois sont assemblées, qu'ils doivent être peints après soudure, rivetage, ou clinchage car l'application d'une soudure ou d'un rivet sur une surface peinte endommagerait la peinture. Puisque ces meubles sont assemblés l'accès aux cavités et recouvrements lors du dégraissage et puis de la peinture est rendu difficile. De plus ces meubles doivent également être stockés et transportés à l'état monté, ce qui nécessite à chaque fois plus d'espace.

On connaît également les meubles monoblocs montés à l'aide de vis et de boulons. Ceux-ci n'ont pas les désavantages des meubles soudés, rivetés ou clinchés, mais leur temps de montage nécessite nettement plus de travail qu'un montage par emboîtement. Il faut en effet de nombreuses vis à boulons pour que le meuble monobloc ait une rigidité similaire à celle d'une armoire soudée ou rivetée.

L'invention a pour but de réaliser un meuble métallique de bureau à monter par emboîtement, mais n'ayant pas cette tendance à ballotter et qui forme un parallélépipède quasi-indéformable, dit «monobloc».

A cette fin, un meuble métallique de bureau suivant l'invention est caractérisé en ce qu'une colle adhésive durcissante est présente dans au moins un desdits éléments d'emboîtement femelles, laquelle colle adhésive durcissante s'étend entre au moins une surface interne de l'élément d'emboîtement femelle et au moins une surface de l'élément d'emboîtement mâle, lorsque ce dernier est emboîté dans l'élément d'emboîtement femelle. Il a en effet été constaté, de façon surprenante, qu'en appliquant une colle adhésive durcissante dans l'élément d'emboîtement femelle et qu'en faisant durcir cette colle après avoir introduit l'élément d'emboîtement mâle dans l'élément d'emboîtement femelle, la colle durcit dans l'espace entre la surface externe de l'élément d'emboîtement mâle et la surface interne de l'élément d'emboîtement femelle et rigidifie ainsi la liaison entre ces parois et ce sur toute la longueur recouverte de matière adhésive durcissante. Cette rigidification est telle qu'elle donne au meuble une rigidité tout à fait comparable, voire supérieure à celle d'un meuble monobloc traditionnel (soudé, riveté, clinché ou vissé).

Une première forme de réalisation d'un meuble suivant l'invention est caractérisée en ce que ladite colle adhésive durcissante s'étend sur l'ensemble de l'élément d'emboîtement mâle lorsqu'il est emboîté dans l'élément d'emboîtement femelle. Ainsi l'élément d'emboîtement mâle est pour ainsi dire unifié avec l'élément d'emboîtement femelle, car il y a des surfaces de contact de part et d'autre des surfaces de l'élément d'emboîtement mâle, et ce sur l'ensemble de la surface recouverte de matière adhésive durcissante.

Une deuxième forme de réalisation d'un meuble suivant l'invention est caractérisée en ce que le meuble comporte une structure de fond pourvue d'un profil d'emboîtement dit de verrouillage, pourvu pour s'engager avec le profil d'emboîtement dit de positionnement présent sur la paroi de dos ou les parois latérales. Une même liaison que celle entre les parois latérales et la paroi de dos est ainsi obtenue avec la structure de fond.

Une troisième forme de réalisation d'un meuble suivant l'invention est caractérisée en ce que le meuble comporte un dos en deux parties, munies de profils d'emboîtement clissés, permettant leur montage par emboîtement lors du montage du dos et son collage pour former une paroi rigide.

De préférence, la colle durcissante est un adhésif à deux composants. Une telle colle adhésive durcissante permet une excellente adhérence entre les pièces métalliques, peintes ou non, dont est formé le meuble.

L'invention sera maintenant décrite plus en détail à l'aide des dessins illustrant une forme de réalisation préférentielle d'un meuble suivant l'invention. Dans les dessins :
la figure 1 montre une armoire suivant l'invention;
la figure 2 montre une coupe selon la ligne II-II';
la figure 3 montre une coupe selon la ligne III-III' ;
la figure 4 montre une coupe selon la ligne IV-IV';
les figures 5 et 6 montrent l'assemblage des plinthes avant et arrière sur les parois latérales dans la structure de fond de l'armoire; et
les figures 7 et 8 montrent une vue d'une paroi de dos d'une armoire en deux parties clissées.

Dans les dessins une même référence a été attribuée à un même élément ou à un élément analogue.

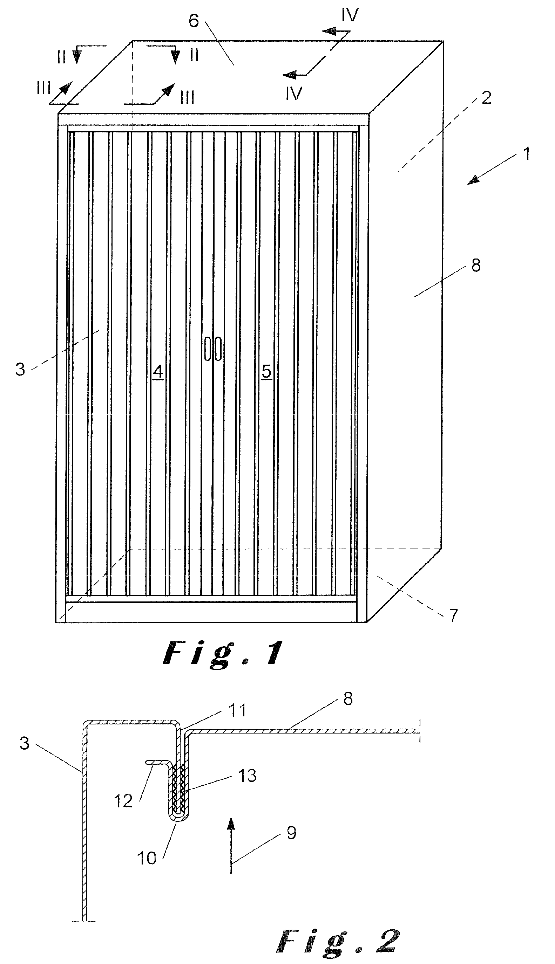

Le meuble métallique 1, illustré à la figure 1, est une armoire de bureau. Il va de soi que l'invention n'est pas limitée à des armoires de bureau et qu'elle s'applique également à tout type de meuble de bureau comme par exemple des armoires, des classeurs, des caissons, des pieds-panneaux de bureau ou des rayonnages. L'invention est toutefois limitée à des meubles métalliques.

L'armoire illustrée à la figure 1 comporte une première 2 et une deuxième 3 paroi latérale ainsi qu'une paroi de dos 8, reliée aux parois latérales. L'armoire comporte également une paroi de dessus 6 et une structure de fond 7. De préférence, l'armoire est pourvue d'au moins une porte 4, 5. Les parois latérales et la paroi de dos sont pourvues de profils d'emboîtement 9 dit de positionnement, comme illustré à la figure 2. Dans cet exemple, le profil d'emboîtement dit de positionnement est formé par un élément 10 d'emboîtement femelle faisant partie de la paroi de dos 8, et d'un élément d'emboîtement mâle 11, faisant partie de la paroi latérale 3. Il va de soi que l'élément d'emboîtement femelle pourrait également faire partie de la paroi latérale et l'élément d'emboîtement mâle de la paroi de dos. L'élément d'emboîtement femelle 10 présente un profil en V,U ou C ou formes dérivées et forme pour ainsi dire un récipient. Cet élément d'emboîtement femelle 10 est solidaire de la paroi de dos et comporte un pli, notamment celui orienté vers la paroi latérale 3, qui possède une extrémité 12 évasant l'élément d'emboîtement femelle. Ceci facilite l'emboîtement de l'élément d'emboîtement mâle 11 dans l'élément d'emboîtement femelle 10. L'élément d'emboîtement mâle fait partie intégrante de la paroi latérale 3 et est obtenu idéalement par pliage de la tôle. L'élément d'emboîtement mâle possède de préférence un profil en forme de lame. Il n'est pas indispensable que les profils d'emboîtement s'étendent sur toute la hauteur des parois latérales et de dos. Il suffit en effet qu'ils s'étendent sur une fraction de cette hauteur en fonction de la dimension de l'armoire.

Les parois de l'armoire sont peintes avant montage et lors du montage une colle adhésive durcissante 13 est placée dans l'élément d'emboîtement femelle avant d'y introduire l'élément d'emboîtement mâle. De préférence, cette colle est une colle adhésive durcissante pour métaux -peints ou non- à deux composants, comme par exemple un composant à base d'un liant de polyacrylate dans le monomère de polymethacrylate et un composant à base de peroxide de benzoyl. Après injection de la colle adhésive durcissante dans l'élément d'emboîtement femelle et avant que la colle ne durcisse, l'élément d'emboîtement mâle est introduit dans l'élément d'emboîtement femelle pour permettre l'emboîtement entre la paroi de dos 8 et la paroi latérale 3. Lorsque l'élément d'emboîtement mâle pénètre dans l'élément d'emboîtement femelle, la colle 13, qui à ce stade n'a pas encore durci, va se répartir de part et d'autre de la surface de l'élément d'emboîtement mâle et ainsi remplir l'espace entre la surface de l'élément d'emboîtement mâle et la (les) surface(s) interne(s) de l'élément d'emboîtement femelle. L'espace entre ces surfaces est ainsi rempli partiellement ou totalement par la colle et il y a de la colle sur les surfaces à l'intérieur de l'élément d'emboîtement femelle. Il faut toutefois noter que pour la réalisation de l'invention, il est préférable d'avoir de la colle sur l'ensemble de l'élément d'emboîtement mâle, mais qu'il suffirait d'avoir de la colle entre une seule surface de l'élément d'emboîtement mâle et la surface interne de l'élément d'emboîtement femelle. Il va de soi qu'au lieu d'appliquer la colle dans l'élément d'emboîtement femelle, il est également possible de l'appliquer sur l'élément mâle avant emboîtement.

Après introduction de l'élément d'emboîtement mâle, la colle a le temps de durcir sans que les parois subissent un mouvement par le seul choix judicieux des profilages d'emboîtage. L'adhésion se fait par le seul effet d'emboîtement, sans outillage, ni gabarit, ni main-d'oeuvre supplémentaire, sans nécessiter un accélérateur de durcissement

La présence de la colle adhésive durcissante dans le profil d'emboîtement dit de positionnement permet de rigidifier la liaison entre les parois de dos et latérales, de telle façon à éviter que les parois aient une tendance à balloter. Il a en effet été constaté, de façon surprenante, que la présence de la colle adhésive durcissante dans le profil d'emboîtement donnait au meuble une rigidité au moins égale, voire même supérieure à celle d'un meuble monobloc, sans entraver le fonctionnement de la ou des porte(s). Des tests de rigidité où la déformation selon un axe diagonal du meuble est mesurée après application d'une force sur le meuble ont fait apparaître que la déformation était même sensiblement inférieure par rapport à des meubles assemblés par soudage ou par vis et boulons. Ainsi, pour une torsion appliquée sur le meuble, les déformations selon l'axe diagonal mesurées sont comparativement :
- assemblage par vis et boulons: : Δ 20;
- assemblage par soudure: : Δ 10;
- assemblage par usage de la colle: :Δ 2.

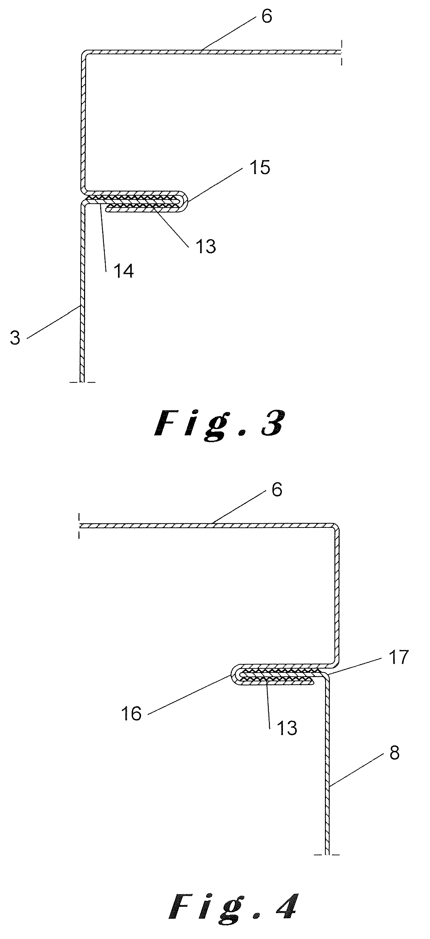

La figure 3 illustre l'assemblage de la paroi de dessus 6 avec une paroi latérale 3. Dans cet exemple, l'élément d'emboîtement mâle 14 fait partie de la paroi latérale 3, alors que l'élément d'emboîtement femelle 15 dans lequel est placée la colle adhésive durcissante fait partie de la paroi de dessus 6.

La figure 4 illustre l'assemblage de la paroi de dos 8 avec la paroi de dessus 6. Dans cet exemple, l'élément d'emboîtement mâle 17 fait partie de la paroi de dos 8, alors que l'élément d'emboîtement femelle 16 dans lequel est placée la colle fait partie de la paroi de dessus 6.

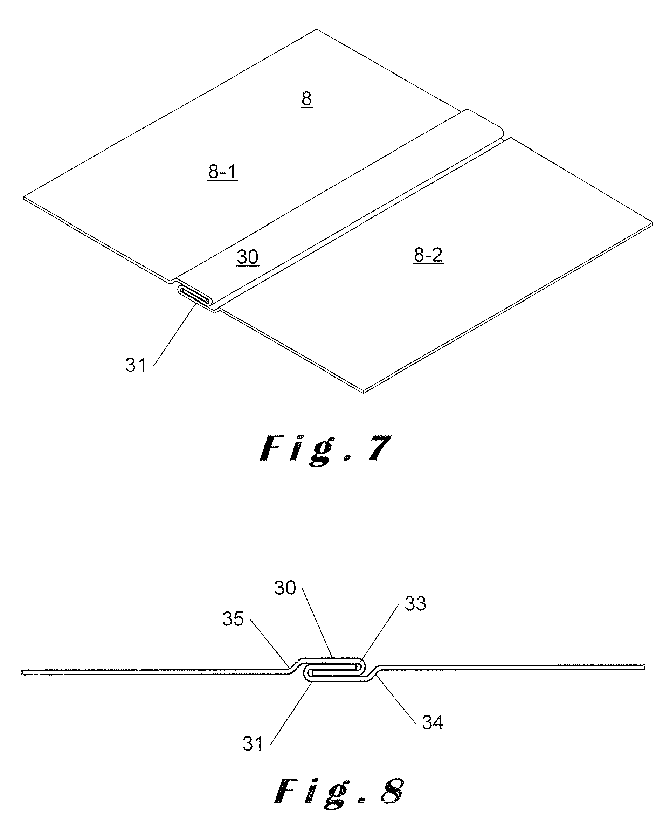

Les figures 7 et 8 montrent une vue d'une paroi de dos d'une armoire en deux parties clissées. En effet, pour des armoires ayant une certaine largeur, et pour assurer un emballage compact, il est avantageux de former la paroi de dos en deux parties clissées. La paroi de dos comporte ainsi deux feuilles 8-1 et 8-2 formant les parties clissées, chaque feuille comporte un profil en U 30 et 31. Les profils en U s'emboîtent l'un dans l'autre et une colle adhésive et durcissante 33 est présente dans les profils en U. Les profils sont appliqués dans la feuille par l'application d'un pli 34, 35 formant un décalage par rapport au plan de la feuille. Le profil en U étant alors chaque fois formé à partir de la section décalée de la feuille par pliage de la tôle. Le fait d'appliquer la colle dans les profils en U permet de rigidifier la paroi de dos.

La structure de fond peut être associée aux parois latérales et à la paroi de dos en employant également un assemblage par emboîtement, comme décrit ci-dessus. A cette fin, la structure de fond possède soit l'élément d'emboîtement femelle, soit l'élément d'emboîtement mâle ou même les deux éléments. La colle adhésive durcissante (13) étant également appliquée dans l'élément d'emboîtement femelle ou sur l'élément mâle, comme décrit au préalable.

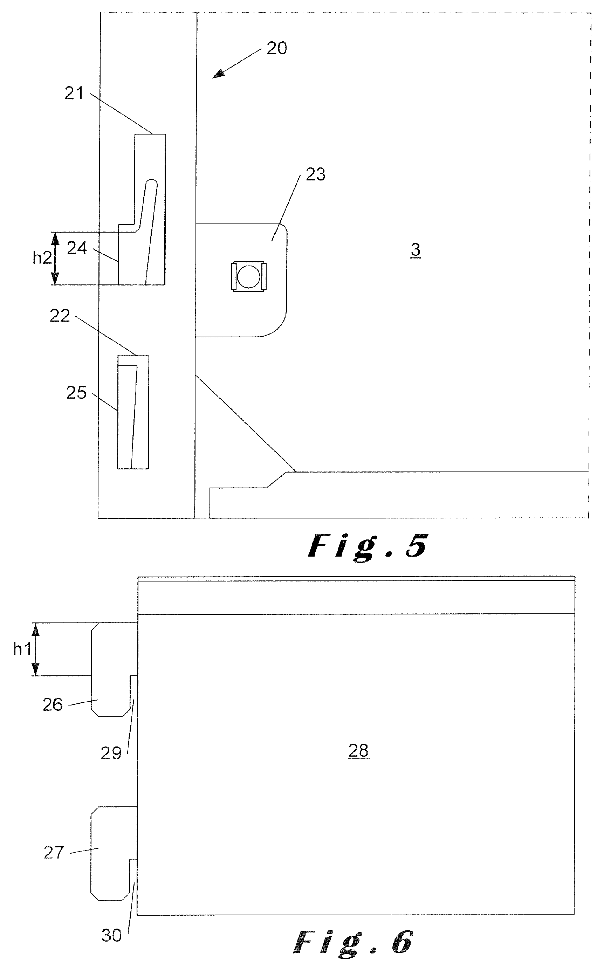

Il est toutefois possible d'utiliser une autre façon de monter la structure de fond que celle qui fait usage d'un assemblage par emboîtement. Ainsi, la figure 5 illustre la partie inférieure d'une paroi latérale 3. Cette paroi latérale possède à ses extrémités un profil 20 en U, obtenu par pliage de la tôle, dont est fabriquée la paroi latérale. Deux découpes 21 et 22 sont apportées dans le profil 20. La découpe 21 est sensiblement en forme de L inversé, alors que le profil 21 est essentiellement rectangulaire. Dans ce profil 20 en U vient s'emboîter une pièce 23 de fixation, qui repose sur un rebord de la paroi latérale. La pièce de fixation 23 est pourvue d'une première ouverture 24 et d'une deuxième ouverture 25. La première ouverture s'étend derrière la découpe 21, alors que la deuxième ouverture 25 s'étend derrière la découpe 22. La première ouverture 24 et la deuxième ouverture 25 possèdent un flanc incliné situé vis-à-vis d'un flanc droit, qui est aligné au flanc de la découpe dans lequel elle est appliquée. Ceci donne à la deuxième ouverture 25 une forme évasée vers le haut. La première ouverture 24 possède une partie supérieure, ayant le profil d'une fente et une partie inférieure plus large que la partie supérieure.

Les ouvertures 24 et 25 servent à recevoir des dents 26 et 27 (figure 6), faisant partie d'un longeron 28. Ce dernier fait partie de la structure de fond de l'armoire qui en possède deux, l'un disposé du côté de la face frontale du meuble et l'autre disposé du côté de la face arrière du meuble pour relier respectivement les parties avant et arrière des parois latérales 2 et 3. Les dents 26 et 27 sont en décalage tant dans le sens de la longueur que dans le sens de la profondeur du longeron 28. Une fente 29, 30 sépare la dent 26, 27 du flanc latéral du longeron autorisant ainsi leur déplacement dans les ouvertures 24 et 25

Pour monter le longeron dans la paroi latérale, la dent 26 est engagée dans l'ouverture 24 et la dent 27 dans l'ouverture 25. Plus particulièrement, la dent 28 est engagée dans la fente de l'ouverture 24. Ensuite les dents et le longeron sont abaissés, de telle façon que les dents glissent dans les ouvertures le long des flancs inclinés. Arrivée en fin de course, la dent 26 peut s'engager par pivotement du longeron dans la partie plus large de l'ouverture 24. Le longeron est ainsi verrouillé dans la paroi latérale par ce pivotement qui, selon le cas, est réalisé sur les faces avant ou arrière du meuble. En effet, la hauteur h1 du support de la dent 26 correspond à la hauteur h2 de la partie plus large de la première ouverture 24. Ainsi, le support de la dent est bloqué dans la partie plus large de la première ouverture, ce qui à son tour bloque le longeron.

Le jeu laissé entre le support de la dent et l'épaisseur de l'ouverture de la pièce de fixation 23 est tel qu'il y a emboîtement avec serrage à bloc du longeron. Le mouvement de pivotement inverse est empêché par la présence des profils de la structure de fond s'emboîtant sur le bord supérieur 31 des longerons 28. Ces profils offrent dès lors une surface de collage de la paroi de fond 7 sur le bord supérieur profilé des longerons 28, rendant ceux-ci solidaires de la structure de fond 7.

Cette façon de monter la paroi de fond permet de clôturer la séquence de montage en l'air du meuble en assurant le maintien des profils emboîtés entre eux sans liberté de mouvement, sans outillage ni gabarit ni intervention extérieure pendant le durcissement de la colle. Cette façon de monter donne également au meuble après durcissement de la colle adhésive une rigidité supérieure à celle d'une armoire monobloc traditionnelle.

La figure 7 illustre l'assemblage du dos 8 en deux parties dont les bords se faisant face sont profilés de manière à former un double pli clissé pouvant recevoir la colle 13 destinée à les rendre solidaires.

## Revendications

1. Meuble métallique de bureau, en particulier une armoire de bureau, comprenant au moins une première et une deuxième paroi latérale ainsi qu'une paroi de dos et une paroi de dessus, lesdites parois étant pourvues de profils d'emboîtement, dits de positionnement, pour l'assemblage entre-elles par emboîtement, lesquels profils d'emboîtement présentent au moins un élément d'emboîtement femelle et au moins un élément d'emboîtement mâle, agencé pour être glissé dans l'élément d'emboîtement femelle, **caractérisé en ce qu'**une colle adhésive durcissante est présente dans au moins un desdits éléments d'emboîtement femelles, laquelle colle adhésive durcissante s'étend entre au moins une surface interne de l'élément d'emboîtement femelle et au moins une surface de l'élément d'emboîtement mâle, lorsque ce dernier est emboîté dans l'élément d'emboîtement femelle.

2. Meuble métallique suivant la revendication 1, **caractérisé en ce que** ladite colle adhésive durcissante s'étend sur l'ensemble de l'élément d'emboîtement mâle lorsqu'il est emboîté dans l'élément d'emboîtement femelle.

3. Meuble métallique suivant la revendication 1 ou 2, **caractérisé en ce que** ladite colle adhésive durcissante est présente dans chacun des éléments d'emboîtement femelle.

4. Meuble métallique suivant l'une des revendications 1 à 3, **caractérisé en ce qu'**il comporte une structure de fond pourvue d'un profil d'emboîtement, dit de verrouillage, pourvu pour s'engager avec le profil d'emboîtement, dit de positionnement, présent sur la paroi de dos ou les parois latérales.

5. Meuble métallique suivant l'une des revendications 1 à 4, **caractérisé en ce que** la colle adhésive durcissante est un adhésif à deux composants pour métaux, peints ou non.

6. Meuble métallique suivant l'une des revendications 1 à 3, **caractérisé en ce qu'**il comporte une structure de fond pourvue de deux longerons l'un disposé à la face frontale et l'autre à la face arrière de la structure de fond, lesdits longerons étant pourvus de dents agencées pour faire la jonction avec des pièces de fixation montées dans lesdites parois latérales.

7. Meuble métallique suivant la revendication 6, **caractérisé en ce que** la pièce de fixation est pourvue d'une première ouverture et d'une deuxième ouverture, chaque ouverture ayant un flanc incliné, ladite première ouverture ayant une partie dimensionnée de telle façon à y bloquer une desdites dents.

8. Meuble métallique suivant la revendication 7, **caractérisé en ce que** la dent est engageable par pivotement dans ladite partie de la première ouverture.

9. Meuble métallique suivant l'une des revendications 1 à 8, **caractérisé en ce que** la paroi de dos est formée en parties clissées, chaque partie présentant un profil en U dans lequel une colle adhésive et durcissante est appliquée.
